# EUROPÄISCHE PATENTANMELDUNG

(11) **EP 3 683 089 A2**
(43) Veröffentlichungstag der Anmeldung: **22.07.2020**
(21) Anmeldenummer: 20151562.4
(22) Anmeldetag: 14.01.2020
(51) Int. Cl.: B60M 1/32, B60M 1/30

(54) **STROMSCHIENE FÜR EINE STRASSENFAHRBAHN**

(30) Priorität: 15.01.2019 DE 102019100911; 18.06.2019 DE 102019116443
(71) Anmelder: Miller, Bernhard, 71263 Weil der Stadt (DE)
(72) Erfinder: Miller, Bernhard, 71263 Weil der Stadt (DE)
(74) Vertreter: Patentanwälte und Rechtsanwalt Weiß, Arat & Partner mbB

(57) **Zusammenfassung**

Die Erfindung betrifft eine Stromschiene entlang der Straßenfahrbahn zur Stromversorgung von elektrisch betriebenen Kraftfahrzeugen, dadurch gekennzeichnet, dass die Kontaktflächen (1, 3) dieser Stromschiene nebeneinander angeordnet sind und dass diese durch einen isolierenden Mittelsteg (6) getrennt sind.

## Beschreibung

### Technisches Gebiet

Die Erfindung betrifft eine Stromschiene für eine Straßenfahrbahn nach dem Oberbegriff des Anspruchs 1.

### Stand der Technik

Um Fahrzeuge während der Fahrt direkt mit elektrischer Energie zu versorgen sind verschiedene Lösungsansätze bekannt. Neben der Stromversorgung durch eine Oberleitung wie seit Jahrzehnten von Bahnen bekannt, wurden in den letzten Jahrzehnten weitere Alternativlösungen entwickelt. So bietet die Fa. Alstom eine in die Fahrbahn eingelassene Stromschiene für Straßenbahnen an, welche während des Überfahrens eine Spannung zuschaltet. Den Minuspol liefert die Schiene der Straßenbahn.

Weitere bekannte Lösungen sind eine induktive Kopplung von in die Fahrbahn eingelassenen Induktionsschleifen, welche die Akkus von Bussen an Haltestellen aufladen. Auch sind verschiedene Varianten von Stromschienen bekannt, welche nach Ausfräsen einer Rinne im Asphalt in die Fahrbahn eingelassen werden und über einen an der Fahrzeugunterseite angebrachten Stromabnehmer eine Stromversorgung von LKW und PKW ermöglichen.

Auch ist eine Stromschiene bekannt, welche nicht in die Fahrbahn eingelassen sondern auf dem Fahrbahn Belag angebracht ist. Diese Lösung besitzt jedoch nur eine Stromkontaktspur, welche in kurze Segmente unterteilt ist und permanent die Polarität ändert. Zur Stromübertragung in das Fahrzeug sind an dessen Unterboden zwei hintereinander angeordnete Stromabnehmer notwendig. Auch wird hierbei nach jedem Segmentende (max. ca. 1 Meter lang) ein Steuergerät zum Abschalten des Segments benötigt. Die Formgebung dieser Stromschien ist nicht geeignet, leistungsfähige Versorgungsleitungen aufzunehmen. Auch besitzt diese keine Profilform um eine auf mechanischer Basis wirkende Lenkungsführung zu ermöglichen. Zwar existieren verschiedene Möglichkeiten der berührungslosen Sensierung von Leitungen, jedoch ist für eine sichere Lenkungsführung vorteilhaft, eine auf mechanischer Basis arbeitende Sensierung mit Hilfe eines Profils einzusetzen.

Die meisten bisher entwickelten Schienenkonzepte sind in der Fahrbahn integriert. Hierzu muss insbesondere bei nachträglicher Ausrüstung der Stromschiene der Asphaltbelag ausgefräst und nach Einbringen der Stromschiene z.B. durch Ausgießen wieder verschlossen werden. Das Einbringen in den Straßenbelag ermöglicht einen guten mechanischen Schutz, stellt jedoch einen Mehraufwand dar und schwächt durch das tiefe Einfräsen den Zusammenhalt des Straßenbelags. Bei Regen oder Schnee ist das Entfernen des Wassers im tiefen Schlitz ebenfalls erschwert. Auch sind Wartungs- und Reparaturarbeiten schwierig durchzuführen. Die Kriechstromfestigkeit stellt insbesondere bei schwierigen Witterungsverhältnissen ein Problem dar.

Neben der Sicherstellung einer ausreichenden Hochspannungsfestigkeit auch bei extremen Witterungsbedingungen sind Stromschienen auch hohen mechanischen Belastungen während des Überfahrens z.B. durch LKW's sowie Verschleißerscheinungen infolge intensiver Nutzung ausgesetzt. Des Weiteren werden über die Stromschiene große Energiemengen übertragen, so dass die mechanische und elektrische Ausgestaltung der Stromversorgungsleitungen sowie deren Wärmeableitverhalten ebenfalls eine wichtige Rolle spielen.

### Aufgabe der Erfindung

Die Aufgabe der vorliegenden Erfindung ist es, die Nachteile aus dem Stand der Technik zu überwinden. Insbesondere soll eine Stromschiene zur Verfügung gestellt werden, welche in Ihrer Formgebung einen sehr flachen Aufbau hat und gleichzeitig eine große Breite besitzt. Diese Form der Stromschiene wird vorzugsweise auf der Fahrbahnoberfläche platziert oder mit nur geringer Einbautiefe eingebracht.

### Lösung der Aufgabe

Zur Lösung der Aufgabe führen die Merkmale nach dem Anspruch 1.

Vorteilhafte Ausgestaltungen sind in den Unteransprüchen beschrieben.
Die Erfindung betrifft ein Verfahren zur Versorgung von Fahrzeuge während der Fahrt mit Strom aus der Fahrbahn. Damit können Fahrzeuge hinsichtlich ihrer Lenkung, Geschwindigkeit und ihrem Fahrzeugabstand vollautomatisch und zuverlässig zu geführt werden. Gleichzeitig werden Akkus während der Fahrt geladen. Auf der Oberfläche eines Fahrbahnbelags wird dazu eine Stromschiene angebracht und mit Hilfe eines am Unterboden der Fahrzeuge platzierten Stromabnehmers abgetastet. Eine Kommunikation zwischen Fahrzeug und Stromschiene überträgt präzise Fahrzeuggeschwindigkeit und Fahrzeugposition und damit auch präzise und zuverlässig den Fahrzeugabstand.

Die niedrige Bauhöhe der Stromschiene ermöglicht problemloses Überfahren sowie ggf. nur geringes Einlassen in den Fahrbahnbelag. Die breite Formgebung erlaubt breite Isolationsflächen entlang der Kontaktflächen und damit hohe Kriechstromfestigkeit der spannungsführenden Kontaktflächen. Versorgungsleitungen in Form gestapelter Blechplatten ermöglichen ein Maximum an Leiterquerschnitt, Wärmeableitung und vertikaler Belastbarkeit. Das Aufteilen der Blechplatten in geflochtene Streifen verbessert Längenausdehnungsverhalten und Elastizität. Alternativ dazu kann auch ein Supraleiter eingesetzt werden um insbesondere bei minimalem Fahrzeugabstand die hohen Ströme zu ermöglichen. Auch reduzieren sich damit die Anzahl der Stromeinspeisepunkte für den Supraleiter. Ein Mittelsteg mit beidseitigen Rinnen ermöglicht eine sichere Lenkungsführung, vergrößert den Oberflächenabstand zwischen beiden Stromkontaktflächen und damit die Kriechstromfestigkeit.

Es wird daher eine Stromschiene vorgeschlagen, welche in ihrer Formgebung eine breite und flache Bauweise aufweist.

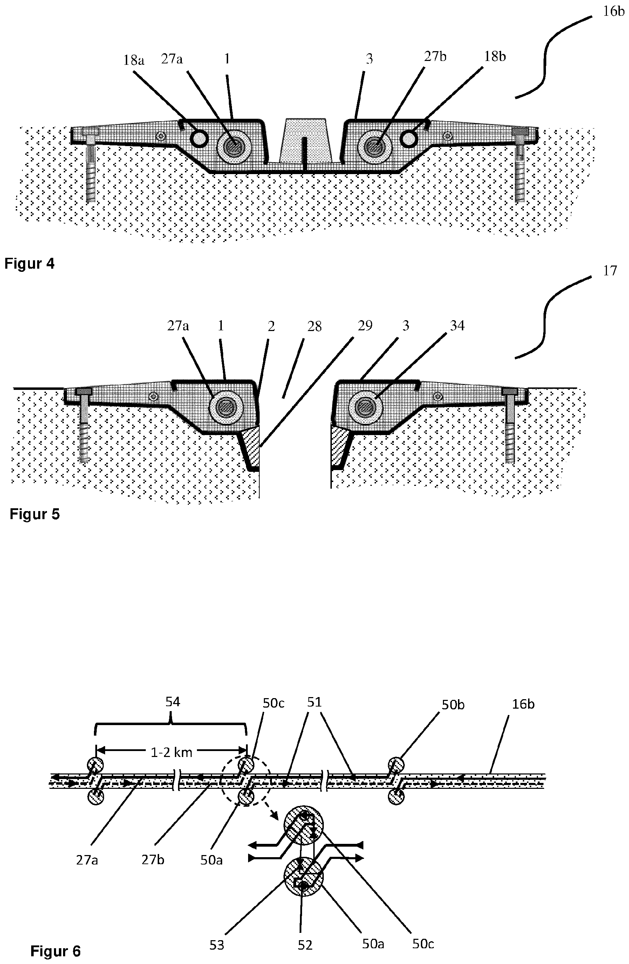

Die im Folgenden beschriebene Stromschiene besitzt folgende Besonderheiten und Vorteile:
- Breite Anordnung mit niedriger Bauhöhe ermöglicht einfaches Überfahren der Stromschiene
- Einfache Montage der Stromschiene auf Fahrbahnoberfläche durch Kleben bzw. Anschrauben
- Einfacher Zugang zur Stromschiene bei Service- und Reparaturarbeiten sowie Schienentausch
- Einfaches, zuverlässiges Abführen von Regenwasser (Schiene höher als Fahrbahnoberfläche)
- Breite Ausgestaltung der Schiene ermöglicht eine hohe Isolationsfestigkeit durch breite Isolierflächen zwischen den beiden stromführenden Kontaktflächen sowie an den Rändern
- Isolierender Mittelsteg 6 mit beidseitiger ebenfalls isolierender Rinne ermöglicht eine hohe Kriechstromfestigkeit - wichtig bei Verdoppelung der Spannungshöhe
- Die schrägen Kontaktflächen 2 ermöglichen eine mechanisch basierende Führung des Stromabnehmers und damit auch eine zuverlässige Lenkungsführung des Fahrzeugs
- Leistungsstarke Stromversorgung innerhalb der Schiene wird ermöglicht durch die beiden Versorgungsleitungen in Form mehrerer aufeinander gestapelter Blechplatten. Dadurch ergeben sich folgende Besonderheiten:
   - Vertikale Elastizität, um sich an Unebenheiten der Fahrbahnoberfläche anzupassen
   - Optimale Raumnutzung des Blechplattenpakets innerhalb der Schiene ermöglicht großen Querschnitt der Stromversorgung und damit großen Abstand zwischen jeweiligen Strom-Einspeisepunkten
   - Hohe mechanische Belastbarkeit beim Überfahren der Schiene z.B. durch LKW's
   - Maximale Leistungsübertragung der beiden Versorgungsleitungen
   - Verdopplung der Fahrzeugversorgungsspannung durch Anlegen einer negativer Versorgungsspannung an Stelle von GND-Potential □ Doppelte Versorgungsspannung und folglich halbierter Strom führt bei gegebenem Leiterquerschnitt der Kupferbleche zur Verdopplung des Abstands der Versorgungseinspeisung
   - Maximale Wärmeableitung durch flache Formgebung der gestapelten Kupferbleche
   - Dünne Isolierschicht mit guter Wärmeleitung zwischen Kupferblechunterseite und Metallbodenplatte ergibt gute Wärmeableitung gegenüber Fahrbahnoberfläche
   - Begrenzung auf maximal zulässiger Temperatur der Versorgungsleitungen durch permanente Temperaturmessung und ggf. Reduzierung des Stroms zu den Fahrzeugen. Die Reduzierung des Ladestroms zum jeweiligen Fahrzeug erfolgt in Abhängigkeit des Akkuladezustands und der noch geplanten Fahrzeit entlang der Stromschiene
   - Alternativ Einsatz eines Supraleiters an Stelle von klassischen Stromleitungen
- Aktivieren der Stromschiene erfolgt durch Verbinden der positiven Versorgungsspannung mit der Kontaktfläche sowie der negativen Versorgungsspannung mit der Kontaktfläche
- Mit Abschalten der Spannungen an den beiden Kontaktflächen 1, 3 werden beide Kontaktflächen und mit Gehäusepotential (GND) der elektrisch leitenden Trägerplatte verbunden.
- Entwässern der seitlich des Mittelstegs angeordneten Rinnen erfolgt durch die in der Stromschiene integrierten Entwässerungskanäle oder kleinen in der Scheine integrierte Pumpen
- Heizelemente oder eine Heizfolie entlang der jeweiligen Entwässerungskanäle sowie nahe der beiden Kontaktflächen sichern einen ungehinderten Abfluss des Wassers bei Frost sowie ein Schmelzen und damit Beseitigen des Schnees bei Schneefall.
- Befestigen der Stromschiene auf der Fahrbahn erfolgt mittels Klebung, ggf. zusätzlich mit Asphaltdübeln
- Einfache Austauschmöglichkeit der beiden z.B. aus Blechstreifen bestehenden Kontaktflächen infolge intensiver Nutzung und Materialabtrags durch einrastende Profilnasen.
- Verhindern schädlicher Längenänderung der Versorgungsleitungen infolge hoher Temperaturschwankungen durch Bilden schmaler, übereinander platzierter Blechstreifen in verflochtener Art (s. Figur 6) an Stelle massiver Blechplatten

### Figurenbeschreibung

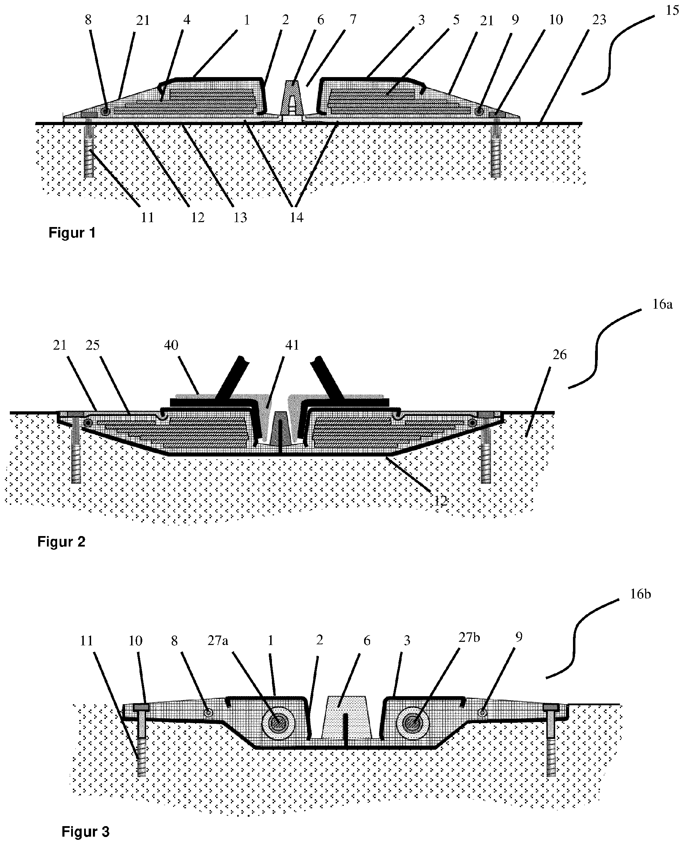

Figur 1 zeigt eine Stromschiene in Schnittdarstellung welche auf der Fahrbahnoberfläche angebracht wird und deren Kontaktflächen leicht austauschbar sind.
Figur 2 zeigt wie in Figur 1 und 2 eine Stromschiene, welche jedoch zumindest teilweise in die Fahrbahn eingelassen wird. Die Oberseite dieser Variante besitzt zu den Rändern hin ein leichtes Gefälle. Die Außenhülle ist komplett mit Metall bedeckt, so dass die Stromschiene komplett metallisch abgeschirmt werden kann.
Figur 3 zeigt wie in Figur 1 und 2 eine Stromschiene, welche ebenfalls teilweise in die Fahrbahn eingelassen wird. Die Versorgungsleitungen sind mit einem einpoligen Supraleiter ausgestattet. Die Oberseite dieser Variante besitzt zu den Rändern hin ebenfalls ein leichtes Gefälle.
Figur 4 zeigt wie in Figur 3 eine Stromschiene, welche ebenfalls teilweise in die Fahrbahn eingelassen wird. Zusätzlich zur Versorgungleitung in Form eines Supraleiters 27 ist jeweils noch eine zusätzliche Stromversorgungsleitung zur Stromversorgung benachbarter Segmentabschnitte 1,3 vorgesehen, damit der Supraleiter 27 nicht bei jedem neuen Segmentabschnitt einen Versorgungsausgang benötigt.
Figur 5 zeigt wie in Figur 3 eine funktionskompatible Stromschiene, deren Versorgungsleitungen mit einem einpoligen Supraleiter ausgestattet sind. An Stelle eines Mittelstegs ist diese Variante mit einem in die Fahrbahn eingelassenen Schlitz ausgestattet, welcher dazu dient, bei einer Sondertrasse ein autonomes Bergesystem für Pannenfahrzeuge zu betreiben.
Figur 6 zeigt in einer Draufsicht schematisch den Verlauf der Stromversorgungsleitungen in Form von Supraleitern. Gezeigt wird hierbei insbesondere der Strömungsverlauf des Kühlmittels für den Supraleiter sowie die Platzierung der Kühlaggregate und deren Möglichkeit zur Redundanz.

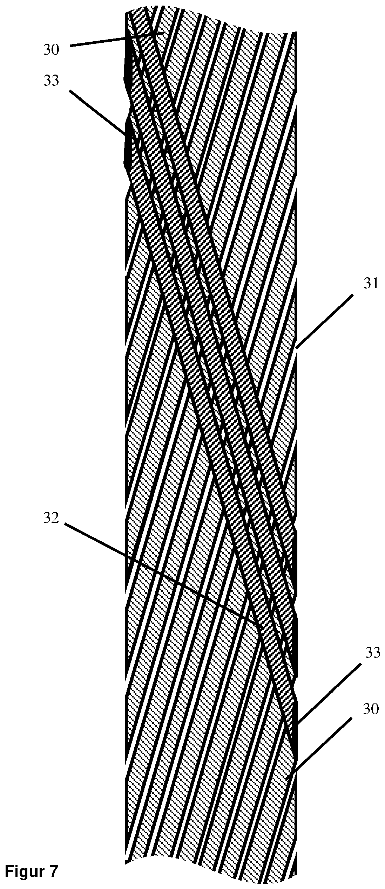

Figur 7 zeigt in Draufsicht einen Ausschnitt einer Versorgungsleitung 4, 5 aus einer Vielzahl schmaler, schräg verlaufender Blechstreifen zusammengesetzt. An den jeweiligen seitlichen Rändern dieser aus einzelnen Streifen zusammengesetzten Blechlagen werden diese Streifen 30 umgeknickt und in der darüber liegenden Ebene in entgegengesetzter schräg verlaufender Richtung weitergeführt.

### Kontaktieren der Stromschiene

Um ein einfaches Kontaktieren der fahrzeugseitigen Stromabnehmer auf der Stromschiene zu ermöglichen, sind die Kontaktflächen der Stromschiene direkt an der Oberfläche nebeneinander platziert. Dies ermöglicht ein einfaches Kontaktieren während der Fahrt entlang der Stromschiene. Eine sichere Erkennung der genauen Fahrzeugposition und Geschwindigkeit erlaubt eine sichere Zu- und Abschaltung der Stromschiene und gewährleistet damit einen sicheren Schutz vor Berührung.

### Länge der abschaltbaren Kontaktflächen

Die Länge der jeweils abschaltbaren Kontaktflächen 1 und 3 (von z.B. 10 bis 20 Metern) wird bestimmt von den Anforderungen an den Berührungsschutz. Eine Vergrößerung der abschaltbaren Segmentlänge kann erreicht werden, indem Sensoren am Frontbereich der Fahrzeuge (Ultraschall, Video, Radar) die Fahrbahn abtasten und im Falle des Erkennens einer die Fahrbahn betretenden Person eine sofortige Abschaltung des aktuell aktiven Stromschienensegments zu veranlassen.

### Austauschen von abgenutzten Kontaktflächen

Das Austauschen der Kontaktflächen infolge von Verschleiß kann automatisiert werden. Dabei kann mittels einer Säge auf der auszutauschenden Kontaktfläche ein Längsschnitt angebracht werden. Somit lässt sich die Kontaktfläche 1, 3 einfach entfernen und im Anschluss eine neue Kontaktfläche durch einfaches Einrasten anbringen.

### Mechanische Lenkungsführung

Eine mechanische Lenkungsführung ist eine sehr zuverlässige und einfach nutzbare Art um den Stromabnehmer präzise über den Kontaktflächen zu führen. Dies ist eine wichtige Funktion, da die beiden abzugreifenden Kontaktflächen 1, 3 direkt nebeneinander platziert sind.

Das lenkungsbezogene Abtasten der Stromschiene kann wahlweise an der jeweils inneren Schräge 2 der Kontaktflächen 1, 3 oder ggf. am Mittelsteg 6 erfolgen. In Figur 2 ist ein fahrzeugseitiger zweipoliger Stromabnehmer dargestellt, welcher die Ober- und Innenfläche der Kontaktfläche 1 und 3 abtastet.

### Abschirmung der Stromschiene

In Figur 2 ist eine Variante einer Stromschiene dargestellt, welche komplett von einem metallisch leitenden Gehäuse umschlossen ist. Während der nicht aktiven Phase sind die beiden Kontaktflächen 1,3 über einen elektronischen Umschalter an seinen beiden Enden mit Massepotential 12, bzw. 25 des Gehäuses verbunden. Damit ist die Stromschiene komplett von einem metallischen bzw. elektromagnetisch leitenden Schirmmaterial umschlossen.

### Maximale Übertragungsleistung in Versorgungsleitungen

Durch die Möglichkeit der ständigen, präzisen und zuverlässigen Erfassung der Fahrzeugposition bieten Stromschienen die Voraussetzung zur Verringerung des Abstands zwischen den einzelnen Fahrzeugen. Dadurch können mehr Fahrzeuge diese hochwertige Trasse nutzen, wodurch sich jedoch der notwendige Energiebedarf um ein vielfaches erhöht. Die Versorgungsleitungen werden damit sehr hohen Strömen ausgesetzt, welches einen möglichst hohen Leiterquerschnitt für beide Versorgungsleitungen 4 und 5 notwendig macht. Um beim Verlegen der Stromschiene auch Höhenunterschiede aufgrund von Fahrbahnunebenheiten ausgleichen zu können, setzen sich die beiden Versorgungsleitungen 4, 5 aus einem Bündel aufeinander gestapelter Bleche zusammen.

### Längenausdehnung der Versorgungsleitungen infolge Temperaturänderung

Die Stromschiene besteht aus verschiedenen über der Temperatur sich unterschiedlich stark ausdehnenden Materialien. Neben den jahreszeitlichen Temperaturschwankungen kommt es infolge hoher Versorgungsströme der Stromschiene zu zusätzlich starker Eigenerwärmung. Daher ist es notwendig, die Längenausdehnung der beiden Versorgungsleitungen 4, 5 zu neutralisieren.

Normalerweise ist dies durch Verwendung gängiger Stromkabel (steif oder mittels Litze) kein Problem. Soll der zur Verfügung stehende Einbauraum jedoch eine maximale Stromübertragung ermöglichen, so ist die Verwendung von Kabeln mit Litze nicht zielführend. Da die Stromschiene neben der Maximierung des Leiterquerschnitts beim Überfahren durch LKW außerdem hohen vertikalen Belastungen ausgesetzt ist, wird daher vorgeschlagen, die beiden Versorgungsleitungen 4, 5 in Form schmaler Blechstreifen auszuführen. Wie in Figur 6 dargestellt, bestehen anstelle mehrlagiger Bleche die einzelnen Blechlagen aus jeweils einer Vielzahl von Blechstreifen 30, 32, welche leicht schräg versetzt nebeneinander platziert sind. An den jeweiligen Rändern dieser aus Streifen zusammengesetzten Blechlagen werden diese Streifen 30 umgeknickt 33 oder verschweißt und in der darüber liegenden Ebene in Art des Flechtens weitergeführt 32. Die Abstände 31 zwischen den jeweiligen Blechstreifen 30 bzw. 32 sind minimal, so dass sich die einzelnen Streifen bei minimal auftretender Temperatur berühren. Mit steigender Temperatur vergrößern sich diese Abstände, so dass sich die Breite der Versorgungsleitungen 4, 5 minimal vergrößert. Die Eigenschaften dieser Versorgungsleitungen sind damit ähnlich wie bei Kabellitzen (durchgängige einzelne Leitungsadern), jedoch werden ein maximaler Leiterquerschnitt sowie die vertikal hohe Belastbarkeit beibehalten. Die Herstellung dieser schmalen Blechstreifen kann erfolgen, indem während des ziehharmonikaartigen Faltens der übereinander angeordneten Blechebenen mit Hilfe des Laserschneidens die einzelnen Blechlagen in Streifen geschnitten werden.

### Maximale Abstände für Strom-Einspeisepunkte

Entlang der Fahrbahn befinden sich in regelmäßigen Abständen Strom-Einspeisepunkte, welche die Versorgungsleitungen mit Strom versorgen. Aus Kostengründen wird angestrebt die Abstände dieser Strom-Einspeisepunkte möglichst groß zu gestalten. Neben dem Einsatz von Blechpaketen/-streifen wird daher vorgeschlagen, nicht wie bei den bisher bekannten Stromschienen ein Plus- und Masseanschluss zu benutzen, sondern einen Plus- und Minuspol zu verwenden. Gegenüber GND-Potential führt eine der beiden Versorgungsleitungen eine Spannung von z.B. +750 V, während die zweite Versorgungsleitung eine Spannung von -750 V aufweist. Das Fahrzeug wird dadurch mit einer Spannung von 1500 V versorgt, was zur Folge hat, dass bei gleichbleibender Fahrzeugleistung sich der benötigte Strom halbiert, während die jeweilige Spannungshöhe gegenüber der Umgebung unverändert bleibt. Der Abstand zwischen zwei Einspeisepunkten kann somit verdoppelt werden. Lediglich zwischen den beiden Kontaktflächen liegt die doppelte Spannung (z.B. hier 1500V) an. Durch die beiden Rinnen 7 zwischen den beiden Kontaktflächen ergibt sich eine Verlängerung der Oberfläche, wodurch sich die Kriechstromfestigkeit deutlich erhöht.

### Stromversorgung mittels Supraleiter

Um die Abstände für Strom-Einspeisepunkte noch weiter zu erhöhen wird vorgeschlagen, die Stromversorgungsleitungen mit einem Supraleiter auszustatten. Dadurch ist es möglich, Ströme von mehreren Tausend Ampere zu übertragen. Die Mehrkosten des Supraleiters können ausgeglichen werden, indem sich die Abstände der Stromeinspeisepunkte gravierend vergrößern lassen, denn das Heranführen von leistungsfähigen Versorgungszuleitungen ist insbesondere in bestehender städtischer Infrastruktur eine technische Herausforderung und zudem mit hohen Kosten verbunden.

Die hohen zulässigen Ströme des Supraleiters von mehreren tausend Ampere ermöglichen auch bei einem Ausfall in einem Schienenabschnitt, dass die Versorgung der nachfolgenden Stromschienen-Abschnitte von der jeweils anderen Seite erfolgen kann. Bei einer sternförmigen Stromeinspeisung z.B. am jeweiligen Stadtrand, ist beim Ausfall eines Stromschienen-Abschnitts die Versorgung der übrigen Stromschienen somit gewährleistet.

### Spannungsabgriffe an Supraleiter

Zusätzlich zur Versorgungleitung in Form eines Supraleiters 27 ist jeweils noch eine zusätzliche Stromversorgungsleitung 18 zur Stromversorgung benachbarter Segmentabschnitte 1,3 vorgesehen. Damit kann erreicht werden, dass der Supraleiter 27 nicht bei jedem neuen Segmentabschnitt (z.B. alle 10 bis 20 Meter) einen Versorgungsausgang benötigt. Neben den beiden direkt am Supraleiterausgang befindlichen Segmenten 1, 3 können über die beiden Versorgungsleitung 18a, 18b auch weitere benachbarte Segmentabschnitte 1, 3 mitversorgt werden und damit die Abstände zwischen den einzelnen Supraleiterabgängen deutlich (z.B. auf deutlich über hundert Meter) vergrößert werden.

### Kühlaggregat zum Kühlen des Kältemittels

Die Kühlung des Supraleiters kann durch Kühlaggregate siehe 50a, 50b in Figur 5 am jeweiligen Ende eines Supraleiter-Abschnitts 54 erfolgen. Die Abschnitte können eine Länge von ca. 1 bis 2 km einer Stromschiene abdecken.

Die Kühlaggregate sind wie in Figur 5 gezeigt, jeweils am Anfang und Ende links und rechts seitlich der Stromschiene platziert. Als Gehäuseform des Kühlaggregats wird eine zylindrische Gehäuseform vorgeschlagen. Nach dem Bohren eines Loches in die Fahrbahn kann damit ein zylindrisches Rohr mit festem Boden in das Bohrloch eingelassen und an seiner Außenseite mit Beton oder einem anderen gut wärmeleitfähigen Material verfüllt werden. In diesen zylindrischen dichten Raum wird das Kühlaggregat eingelassen und der Zwischenraum zur besseren Wärmeleitung mit Wasser oder entsprechendem Mittel ausgefüllt. Somit besteht eine gute Wärmeleitfähigkeit zur Abgabe der Abwärme des Kompressors an das umgebende Erdreich. Durch Ausgestaltung sämtlicher Strom- und Wärmeträgerleitungen mit Schnellverbindern bzw. einem Schnellverschluss an den Zuleitungen des Kältemittels entsteht die Möglichkeit zum schnellen und einfachen Austausch des Kälteaggregats im Fall einer Funktionsstörung.

### Redundantes Kühlsystem des Supraleiters

Im Falle des Ausfalls eines Kühlaggregats z.B. 50c kann durch Öffnen von zwei Absperrorganen 53 eine Verbindung zum benachbarten Supraleiter-Abschnitt und dessen Kühlaggregat 50a hergestellt werden. Jedes Kühlaggregat 50a, 50c ist in seiner Kühlleistung so ausgelegt, dass dieses notfalls auch noch den benachbarten Supraleiter-Abschnitt ausreichend kühlen kann. Damit ergibt sich eine Redundanz hinsichtlich des Ausfalls eines Kühlaggregats.
Die Absperrorgane 53 sind fernsteuerbar so dass sich diese bei einem erkannten Fehler selbsttätig öffnen. Sie können auch benutzt werden um einen eventuellen Verlust des Kühlmittels in einem der Abschnitte auszugleichen. Dabei kann durch gezieltes kurzzeitiges Öffnen der Absperrorgane 53 das Kühlmittel aus einem entfernt platzierten Nachfüllbehälter über den Systemdruck das Kühlmittel von einem Abschnitt 54 zum jeweils nächsten weitergeleitet werden.

In den Figuren 1 bis 4 ist eine erste Kontaktfläche 1 zur Stromentnahme durch fahrzeugseitigen Stromabnehmer (z.B. Pluspol) gezeigt. Dabei ist eine schräge Kontaktfläche 2 zur Abtastung für eine mechanisch basierte Spurführung gegeben.
Daneben ist eine zweite Kontaktfläche 3 zur Stromentnahme durch fahrzeugseitigen Stromabnehmer (Minuspol) gezeigt. Außerdem ist eine erste Versorgungsleitung 4 (Pluspol) gezeigt, welche aus gestapelten Blechen besteht.

Auch ist eine Versorgungsleitung 5 (Massepotential oder Minuspol) bestehend aus gestapelten Blechen gezeigt. Zusätzlich ist ein erster Mittelsteg 6a zur verbesserten Spannungsfestigkeit zwischen den beiden Kontaktflächen 1, 3 vorgesehen.

Zusätzlich ist eine zweiter Mittelsteg 6b gezeigt, welcher tauschfähig ausgeführt ist und zur Nutzung bei Lenkungsführung ausgeführt.

Außerdem ist eine Rinne 7 zur verbesserten Spannungsfestigkeit zwischen beiden Kontaktflächen 1, 3 gezeigt. Daneben ist eine erste Datenleitung 8 zum Kommunikationsaustausch zwischen einzelnen Steuergeräten gezeigt, wobei zusätzlich eine zweite Datenleitung 9 (Netzwerkkabel) als Redundanz zu der ersten Datenleitung 8 ausgeführt ist.

Weiter ist eine Befestigungsschraube 10, ein Asphaltdübel 11, eine Stahlplatte 12 als Trägerplatte sowie Gehäusepotential (GND) gezeigt. Auch ist eine erste Folie 13 oder klebfähige Oberfläche der Stahlplatte zur maximalen Rutschfestigkeit zwischen Unterseite der Stromschiene (Blech) und Fahrbahn Belag gezeigt.

Weiter ist ein Entwässerungskanal 14 als Abfluss von sich in den Rinnen 7 sammelndem Wasser vorgesehen.

Daneben ist ein massiver Stahlkern 20 mit einem nicht näher beschriebenen Rastprofil zur Tauschbarkeit des Mittelstegs bei Verschleiß oder Beschädigung gezeigt.

Daneben ist eine isolierende Oberfläche 21 zwischen den Kontaktflächen 1, 2 und einer Fahrbahnoberfläche 23 in Form beispielsweisen Asphaltbelags gezeigt.

Weiter ist eine Nase 22, gezeigt, welche eingerastet zum einfachen Tauschen abgenutzter Kontaktflächen 1, 2 durch Verschleiß dient.

In diesem Zusammenhang ist eine zweite Folie 24 bzw. Oberfläche mit hoher Gleitreibung gezeigt. Auch ist ein Schirmblech 25 gezeigt, welches neben elektrischer Abschirmung auch einer besseren mechanischen Robustheit der Stromschiene dient. Der Vollständigkeit halber wird auf einen Fahrbahn Belag 26 hingewiesen.

Ein erster einzelner Blechstreifen 30 als zusätzliche Versorgungsleitung und ein zweiter Blechstreifen 32 ist ebenfalls in den Figuren 6 gezeigt. Dabei ist zwischen den beiden Blechstreifen 30, 32 ein geringer Abstand 31 vorgesehen.

Außerdem wird auf einen Umknickbereich 33 im Übergang des ersten Blechstreifens 30 in den darüber liegenden zweiten Blechstreifen 32 hingewiesen.

Schließlich wird auf einen fahrzeugseitigen Stromabnehmer 40 und eine dazugehörige Isolierung 44 hingewiesen.

Zuletzt wird auf eine einpolige supraleitende Versorgungsleitung 27 hingewiesen, welche ermöglicht, dass die Abstände der Einspeisepunkte zur Stromeinspeisung in das Schienensystem deutlich reduziert werden. Dabei werden Kühlaggregate 50 verwendet, welche eine zylindrische Gehäuseform aufweisen und in dafür vorgesehene zylindrische Einbauräume direkt neben der Stromschiene 50a, 50c in der Fahrbahn eingelassen werden.

**Bezugszeichenliste**

| | |
|---|---|
| 1 | Erste Kontaktfläche |
| 2 | Kontaktfläche Spurführung |
| 3 | Zweite Kontaktfläche |
| 4 | Erste Versorgungsleitung |
| 5 | Zweite Versorgungsleitung |
| 6 | Mittelsteg |
| 7 | Rinne |
| 8 | Erste Datenleitung |
| 9 | Zweite Datenleitung zur Redundanz |
| 10 | Befestigungsschraube |
| 11 | Asphaltdübel |
| 12 | Stahlplatte |
| 13 | Erste Folie |
| 14 | Entwässerungskanal |
| 15 | Stromschiene auf Fahrbahn platziert |
| 16 | Stromschiene in Fahrbahn eingelassen |
| 17 | Stromschiene kompatibel zu 16 in Fahrbahn mit durchgehendem Schlitz |
| 18 | Stromversorgung für Kontaktfläche 1, 3 der benachbarten Segmente |
| | |
| 20 | Massiver Stahlkern |
| 21 | Isolierende Oberfläche |
| 22 | Nase |
| 23 | Fahrbahnoberfläche |
| 24 | Stromschiene auf Fahrbahn |
| 25 | Schirmblech |
| 26 | Fahrbahn Belag |
| 27a | Supraleiter Leitung einpolig Pluspol |
| 27b | Supraleiter Leitung einpolig Minuspol |
| 28 | Längsschlitz in Stromschiene |
| 29 | Seitliche Isolierung |
| 30 | Erster Blechstreifen |
| 31 | Abstand |
| 32 | Zweiter Blechstreifen |
| 33 | Umknickbereich |
| 34 | Flüssiges Kältemittel zu Kühlung |
| | |
| 40 | Stromabnehmer |
| 41 | Isolierung |
| | |
| 50 | Kühlaggregat für Supraleiterkabel |
| 51 | Fließrichtung des Kältemittels |
| 52 | Kältemaschine mit Umwälzpumpe |
| 53 | Absperrorgan für Redundanz |
| 54 | Supraleiter-Abschnitt für jeweils einen Kühlkreislauf von 2 Supraleitern |
| | |

## Patentansprüche

1. Stromschiene für eine Straßenfahrbahn zur Stromversorgung von elektrisch betriebenen Kraftfahrzeugen, **dadurch gekennzeichnet, dass** die Kontaktflächen (1, 3) dieser Stromschiene nebeneinander angeordnet sind und dass diese durch einen isolierenden Mittelsteg (6) getrennt sind.

2. Stromschiene nach Anspruch 1, **dadurch gekennzeichnet, dass** die spannungsfrei schaltbaren Kontaktflächen (1, 3) eine rastnasenförmige Profilform oder separate Nasen (22) besitzen, sodass die Kontaktflächen (1, 3) ersetzbar sind.

3. Stromschiene nach Anspruch 1, **dadurch gekennzeichnet, dass** die Vertiefungen seitlich des Mittelstegs (6) drainageartige Entwässerungskanäle (14) besitzen.

4. Stromschiene nach einem der Ansprüche 1 bis 3, **dadurch gekennzeichnet, dass** diese Stromschiene auf die Fahrbahnoberfläche (23) aufgebracht oder leicht in die Fahrbahn eingelassen ist.

5. Stromschiene nach einem der vorigen Ansprüche, **dadurch gekennzeichnet, dass** die Temperatur von Versorgungsleitungen (4, 5) gemessen wird und bei zu hoher Temperatur der Versorgungsstrom zu den jeweiligen Fahrzeugen begrenzbar ist.

6. Stromschiene nach einem der vorigen Ansprüche **dadurch gekennzeichnet, dass** Teilbereiche der Stromschiene beheizbar sind.

7. Stromschiene **dadurch gekennzeichnet, dass** die Versorgungsleitungen (4, 5) zum Zweck der Strommaximierung und Robustheit aus aufeinander geschichteten Blechstreifen (31, 32) bestehen.

8. Stromschiene nach Anspruch 7, **dadurch gekennzeichnet, dass** die einzelnen Blechstreifen (31, 32) sich wiederum aus einer Anzahl einzelner schmaler Blechstreifen zusammensetzen und dass diese Blechstreifen derart zusammengefügt oder miteinander verflochten sind, dass die temperaturabhängigen Längenänderung kompensiert werden.

9. Stromschiene **dadurch gekennzeichnet, dass** die Versorgungsleitungen (27a, 27b) zum Zweck der Strommaximierung aus einem supraleitenden Material bestehen.

10. Stromschiene nach Anspruch 9, **dadurch gekennzeichnet, dass** die Kühlaggregate 50 zur Kühlung des Supraleiters in einer zylindrischen Form ausgeführt sind und zum Zweck der besseren Wärmeabgabe in die Fahrbahn eingelassen und überfahrbar versenkt sind.
